(19) Europäisches Patentamt
European Patent Office
Office européen des brevets

(11) **EP 2 664 968 A1**

(12) **EUROPÄISCHE PATENTANMELDUNG**

(43) Veröffentlichungstag:
20.11.2013 Patentblatt 2013/47

(51) Int Cl.:
**G05B 11/38** (2006.01)   **G05D 3/20** (2006.01)
**F15B 15/00** (2006.01)

(21) Anmeldenummer: 12168164.7

(22) Anmeldetag: 16.05.2012

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft**
**80333 München (DE)**

(72) Erfinder: **Tautz, Wilfried, Dr.**
**91301 Forchheim (DE)**

(54) **Regeleinrichtung für eine Hydraulikzylindereinheit mit Einzelventilsteuerung**

(57)   Eine Regeleinrichtung zum Regeln einer Hydraulikzylindereinheit (1) weist einen Regler (15, 15') auf, der eingangsseitig eine Sollgröße (s*, F*) und eine Istgröße (s, F) entgegen nimmt und anhand von deren Differenz ($\delta$s, $\delta$F) eine vorläufige Stellgröße (u, u') für Ventilsteuereinheiten (7) der Hydraulikzylindereinheit (1) ermittelt. Sollgröße (s*, F*) und Istgröße (s, F) sind eine von einem Kolben (3) der Hydraulikzylindereinheit (1) anzunehmende Sollstellung (s*) und eine vom Kolben (3) angenommene Iststellung (s) oder eine vom Kolben (3) auszuübende Sollkraft (F*) und eine vom Kolben (3) ausgeübte Istkraft (F). Dem Regler (15, 15') ist eine Linearisierungseinheit (17) nachgeordnet, welche anhand der vorläufigen Stellgröße (u, u') und Linearisierungsfaktoren (fa bis fd) endgültige Stellgrößen (ua bis ud) ermittelt, die sie an Ventilsteuereinheiten (7a bis 7d) ausgibt, so dass der Kolben (3) mit einer Verstellgeschwindigkeit (v) verstellt wird. Die Linearisierungseinheit (17) bestimmt die Linearisierungsfaktoren (fa bis fd) dynamisch als Funktion zumindest der Iststellung (s) des Kolbens (3) und beidseitig des Kolbens (3) sowie pumpen- und tankseitig der Ventilsteuereinheiten (7a bis 7d) herrschender Arbeitsdrücke (pA, pB, pP, pT). Die Linearisierungseinheit (17) bestimmt die Linearisierungsfaktoren (fa bis fd) derart, dass ein Verhältnis der Verstellgeschwindigkeit (v) zur Differenz ($\delta$s, $\delta$F) von Sollgröße (s*, F*) und Istgröße (s, F) unabhängig von der Iststellung (s) des Kolbens (3) und den Arbeitsdrücken (pA, pB, pP, pT) ist.

FIG 3

EP 2 664 968 A1

**Beschreibung**

Die vorliegende Erfindung geht aus von einer Regeleinrichtung zum Regeln einer Hydraulikzylindereinheit,

- wobei die Regeleinrichtung einen Regler aufweist, der eingangsseitig eine Sollgröße und eine Istgröße entgegen nimmt und anhand der Differenz von Sollgröße und Istgröße eine vorläufige Stellgröße für eine Ventilsteuereinheit der Hydraulikzylindereinheit ermittelt,
- wobei die Sollgröße eine von einem Kolben der Hydraulikzylindereinheit anzunehmende Sollstellung und die Istgröße eine vom Kolben angenommene Iststellung sind oder die Sollgröße eine vom Kolben auszuübende Sollkraft und die Istgröße eine vom Kolben ausgeübte Istkraft sind,
- wobei dem Regler eine Linearisierungseinheit nachgeordnet ist, welche anhand der vorläufigen Stellgröße und eines Linearisierungsfaktors eine endgültige Stellgröße ermittelt, die sie an eine Ventilsteuereinheit ausgibt, so dass der Kolben mit einer Verstellgeschwindigkeit verstellt wird,
- wobei die Linearisierungseinheit den Linearisierungsfaktor dynamisch als Funktion der Iststellung des Kolbens und beidseitig des Kolbens sowie pumpen- und tankseitig der Ventilsteuereinheit herrschender Arbeitsdrücke bestimmt,
- wobei die Linearisierungseinheit den Linearisierungsfaktor derart bestimmt, dass ein Verhältnis der Verstellgeschwindigkeit zur Differenz von Sollgröße und Istgröße unabhängig von der Iststellung des Kolbens und den Arbeitsdrücken ist.

Hydraulikzylindereinheiten zeigen ein Regelverhalten, das stark vom Betriebspunkt der Hydraulikzylindereinheit abhängig ist. Ein Regler, der für einen bestimmten Betriebspunkt optimiert wurde, arbeitet in anderen Betriebspunkten weniger gut oder schlecht.

Zum Verbessern des Regelverhaltens ist im Stand der Technik bekannt, als Regelcharakteristik des Reglers eine so genannte Schmetterlingskurve vorzusehen. Die Schmetterlingskurve deckt jedoch nicht den gesamten Raum möglicher Betriebspunkte ab und arbeitet daher nicht in jedem Betriebszustand optimal.

Weiterhin ist es für Positionsregler für Hydraulikzylindereinheiten bekannt, für die Sollstellung und die Iststellung unabhängig voneinander je eine nichtlineare Transformation vorzunehmen und zusätzlich eine Teillinearisierung des Positionsreglers vorzunehmen. Diese Vorgehensweise ist sehr aufwändig.

Aus der DE 10 2007 051 857 B3 und der inhaltsgleichen US 2010/294 125 A1 ist eine Regeleinrichtung zum Regeln einer Hydraulikzylindereinheit der obenstehend erläuterten Art bekannt. Diese Regeleinrichtung liefert sowohl bei Positionsregelung als auch bei Kraftregelung optimale Regelergebnisse.

Die Aufgabe der vorliegenden Erfindung besteht darin, Möglichkeiten zu schaffen, mittels derer eine Regeleinrichtung der eingangs genannten Art auf einfache Weise flexibler einsetzbar ist.

Die Aufgabe wird durch eine Regeleinrichtung mit den Merkmalen des Anspruchs 1 gelöst. Die Ansprüche 2 bis 6 betreffen vorteilhafte Ausgestaltungen der Regeleinrichtung.

Erfindungsgemäß wird vorgeschlagen, eine Regeleinrichtung zum Regeln einer Hydraulikzylindereinheit zu schaffen,

- wobei die Regeleinrichtung einen Regler aufweist, der eingangsseitig eine Sollgröße und eine Istgröße entgegen nimmt und anhand der Differenz von Sollgröße und Istgröße eine vorläufige Stellgröße für Ventilsteuereinheiten der Hydraulikzylindereinheit ermittelt,
- wobei die Sollgröße eine von einem Kolben der Hydraulikzylindereinheit anzunehmende Sollstellung und die Istgröße eine vom Kolben angenommene Iststellung sind oder die Sollgröße  eine vom Kolben auszuübende Sollkraft und die Istgröße eine vom Kolben ausgeübte Istkraft sind,
- wobei dem Regler eine Linearisierungseinheit nachgeordnet ist, welche anhand der vorläufigen Stellgröße und Linearisierungsfaktoren endgültige Stellgrößen ermittelt, die sie an Ventilsteuereinheiten ausgibt, so dass der Kolben mit einer Verstellgeschwindigkeit verstellt wird,
- wobei die Linearisierungseinheit die Linearisierungsfaktoren dynamisch als Funktion zumindest der Iststellung des Kolbens und beidseitig des Kolbens sowie pumpen- und tankseitig der Ventilsteuereinheiten herrschender Arbeitsdrücke bestimmt,
- wobei die Linearisierungseinheit die Linearisierungsfaktoren derart bestimmt, dass ein Verhältnis der Verstellgeschwindigkeit zur Differenz von Sollgröße und Istgröße unabhängig von der Iststellung des Kolbens und den Arbeitsdrücken ist.

Erfindungsgemäß sind also mehrere Ventilsteuereinheiten vorhanden, für die individuell jeweils eine endgültige Stellgröße ermittelt wird.

Vorzugsweise wird der Linearisierungseinheit zusätzlich ein Parameter zugeführt, den die Linearisierungseinheit bei der Bestimmung der Linearisierungsfaktoren berücksichtigt. Dadurch kann mindestens eine weitere Randbedingung eingehalten werden.

Im einfachsten Fall bestimmt die Linearisierungseinheit in dem Fall, dass der Parameter einen ersten Wert aufweist, die Linearisierungsfaktoren derart, dass zwei der Linearisierungsfaktoren den Wert Null aufweisen und zwei andere der Linearisierungsfaktoren von Null verschiedene Werte aufweisen. Die beiden anderen Linearisierungsfaktoren können insbesondere untereinander den gleichen Wert aufweisen. In diesem Fall ergibt sich das gleiche Verhalten wie bei einer konventionellen einzelnen Ventilsteuereinheit, also wie bei der DE 10 2007 051 857 B3.

Alternativ oder zusätzlich ist es möglich, dass die Linearisierungseinheit in dem Fall, dass der Parameter einen zweiten Wert aufweist, die Linearisierungsfaktoren derart bestimmt, dass die Summe der beidseitig des Kolbens herrschenden Arbeitsdrücke sich der Summe der pumpen- und tankseitig der Ventilsteuereinheiten herrschenden Arbeitsdrücke annähert. In diesem Fall ergibt sich eine besonders niedrige Druckdifferenz an den Ventilsteuereinheiten.

Es ist möglich, dass die Ventilsteuereinheiten als Proportionalventile ausgebildet sind. Vorzugsweise sind die Ventilsteuereinheiten jedoch als binär geschaltete Schaltventile ausgebildet.

Die Regeleinrichtung kann als Hardwarestruktur ausgebildet sein. Vorzugsweise ist sie jedoch als softwareprogrammierbare Regeleinrichtung ausgebildet und mit einem Softwaremodul programmiert, so dass sie auf Grund der Programmierung mit dem Softwaremodul erfindungsgemäß ausgebildet ist.

Das Softwaremodul umfasst Maschinencode, dessen Abarbeitung durch eine an eine Hydraulikzylindereinheit angebundene softwareprogrammierbare Regeleinrichtung bewirkt, dass die Regeleinrichtung wie obenstehend beschrieben ausgebildet wird. Das Softwaremodul kann in maschinenlesbarer Form auf einem Datenträger gespeichert sein.

Prinzipiell ist die erfindungsgemäße Regeleinrichtung universell verwendbar. Vorzugsweise jedoch wird sie zur Anstellungsregelung eines Walzgerüsts verwendet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1        ein Blockschaltbild einer Regeleinrichtung und einer Hydraulikzylindereinheit,
FIG 2        den Aufbau einer Ventilsteuereinrichtung,
FIG 3        den Aufbau der Regeleinrichtung,
FIG 4 und 5  je eine Ermittlungseinrichtung einer Linearisierungseinheit und
FIG 6        eine Anstellungseinrichtung für eine Walze eines Walzgerüsts.

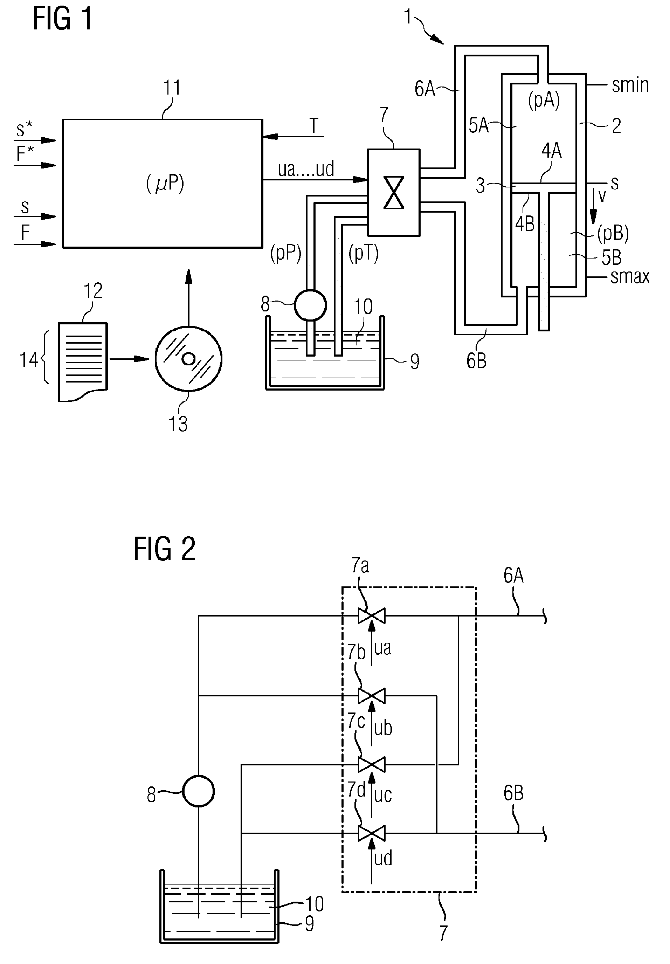

Gemäß FIG 1 weist eine Hydraulikzylindereinheit 1 einen Hydraulikzylinder 2 auf, in dem ein Kolben 3 beweglich gelagert ist. Der Kolben 3 ist innerhalb des Hydraulikzylinders 1 zwischen einer Minimalstellung smin und einer Maximalstellung smax bewegbar. Er befindet sich also zu jedem Zeitpunkt bei einer Iststellung s, die zwischen der Minimalstellung smin und der Maximalstellung smax liegt.

Der Kolben 3 weist eine erste Arbeitsfläche 4A und eine zweite Arbeitsfläche 4B auf. Jede Arbeitsfläche 4A, 4B ist einem entsprechenden Arbeitsvolumen 5A, 5B zugewandt.

Die Arbeitsvolumina 5A, 5B sind über Hydraulikpfade 6A, 6B und eine Ventilsteuereinrichtung 7 mit einer Hydraulikpumpe 8 und einem Hydraulikreservoir 9 hydraulisch verbunden. Die Hydraulikpfade 6A, 6B erstrecken sich hierbei von dem jeweiligen Arbeitsvolumen 5A, 5B bis zur Ventilsteuereinrichtung 7.

Wenn der Kolben 3 sich in seiner Minimalstellung smin befindet, befindet sich im Hydraulikpfad 6A ein bestimmtes Volumen einer Hydraulikflüssigkeit 10. Dieses Volumen ist die minimale Menge an Hydraulikflüssigkeit 10, die sich zwischen der Ventilsteuereinrichtung 7 und der Arbeitsfläche 4A des Kolbens 3 befindet. Diese Menge an Hydraulikflüssigkeit 10 ist das minimal mögliche wirksame Volumen für das Arbeitsvolumen 5A. Es wird nachfolgend mit dem Bezugszeichen VminA bezeichnet.

In analoger Weise befindet sich im Hydraulikpfad 6B eine bestimmte Menge an Hydraulikflüssigkeit 10, wenn der Kolben 3 sich in seiner Maximalstellung smax befindet. Diese Menge an Hydraulikflüssigkeit 10 stellt ein minimal mögliches wirksames Volumen für das Arbeitsvolumen 5B dar. Dieses Minimalvolumen wird nachfolgend mit dem Bezugszeichen VminB bezeichnet.

Wenn der Kolben 3 sich bei einer beliebigen Iststellung s befindet, weist das Arbeitsvolumen 5A einen Volumenwert VA auf, der sich zu

$$VA = VminA + AKA \ (s - smin)$$

ergibt. Mit dem Bezugszeichen AKA ist hierbei der Flächenwert der dem Arbeitsvolumen 5A zugewandten Arbeitsfläche 4A des Kolbens 3 bezeichnet. Es ist weiterhin möglich, das wirksame Volumen VA durch den Flächenwert AKA zu dividieren. Der Quotient

$$hA = VA/AKA$$

entspricht einer effektiven Höhe einer Säule der Hydraulikflüssigkeit 10 über dem Kolben 3.

In analoger Weise können anhand des minimal möglichen wirksamen Volumens VminB, des Flächenwerts AKB der dem Arbeitsvolumen 5B zugewandten Arbeitsfläche 4B, der Iststellung s und der Maximalstellung smax gemäß den Beziehungen

$$VB = VminB + AKB (smax - s)$$

und

$$hB = VB/AKB$$

korrespondierende Werte VB und hB für die zweite Arbeitsfläche 4B bzw. das zweite Arbeitsvolumen 5B ermittelt werden.

Im Arbeitsvolumen 5A herrscht ein erster Arbeitsdruck pA, im zweiten Arbeitsvolumen 5B ein zweiter Arbeitsdruck pB. Über die Hydraulikpumpe 8 wird die Hydraulikflüssigkeit 10 mit einem Pumpendruck pP beaufschlagt. Im Hydraulikreservoir 9 herrscht ein Tankdruck pT. Der Pumpendruck pP und der Tankdruck pT entsprechen einem pumpenseitig und einem tankseitig der Ventilsteuereinheit 7 herrschenden Arbeitsdruck.

Die Ventilsteuereinrichtung 7 weist gemäß FIG 2 mehrere Ventilsteuereinheiten 7a bis 7d auf. Insbesondere sind die beiden Arbeitsvolumina 5A, 5B über je eine eigene Ventilsteuereinheit 7a, 7b mit der Hydraulikpumpe 8 und über je eine eigene weitere Ventilsteuereinheit 7c, 7d mit dem Hydraulikreservoir 9 verbunden. Jeder der vier Ventilsteuereinheiten 7a bis 7d wird jeweils eine eigene endgültige Stellgröße ua bis ud zugeführt. Die jeweilige Ventilsteuereinheit 7a bis 7d wird entsprechend der jeweiligen endgültigen Stellgröße ua bis ud angesteuert.

Es ist möglich, dass die Ventilsteuereinheiten 7a bis 7d Proportionalventile sind. Vorzugsweise handelt es sich jedoch um binär geschaltete Schaltventile, die also nur zwischen den Zuständen vollständig geöffnet und vollständig geschlossen hin und her geschaltet werden können, aber keine definierten Zwischenzustände annehmen können. Die Ansteuerung der Ventilsteuereinheiten 7a bis 7d erfolgt in diesem Fall durch eine pulsweitenmodulierte und/oder pulscodemodulierte Ansteuerung.

Die Ventilsteuereinrichtung 7 und mit ihr die gesamte Hydraulikzylindereinheit 1 wird mittels einer Regeleinrichtung 11 geregelt. Die Regeleinrichtung 11 ist vorzugsweise entsprechend FIG 1 als softwareprogrammierbare Regeleinrichtung 11 ausgebildet. Die Regeleinrichtung 11 wird in diesem Fall mittels eines Softwaremoduls 12 programmiert. Das Softwaremodul 12 kann der Regeleinrichtung 11 beispielsweise mittels eines Datenträgers 13 zugeführt werden, auf dem das Softwaremodul 12 in maschinenlesbarer Form gespeichert ist. Als Datenträger 13 kommt hierbei prinzipiell ein beliebiger Datenträger in Frage. Dargestellt ist (rein beispielhaft) in FIG 1 eine CD-ROM 13.

Das Softwaremodul 12 umfasst Maschinencode 14, der von der Regeleinrichtung 11 abarbeitbar ist. Das Abarbeiten des Maschinencodes 14 durch die Regeleinrichtung 11 bewirkt, dass die Regeleinrichtung 11 die Hydraulikzylindereinheit 1 so regelt, wie dies nachfolgend näher erläutert wird. Die Programmierung der Regeleinrichtung 11 mit dem Softwaremodul 12 bewirkt die entsprechende Ausbildung der Regeleinrichtung 11.

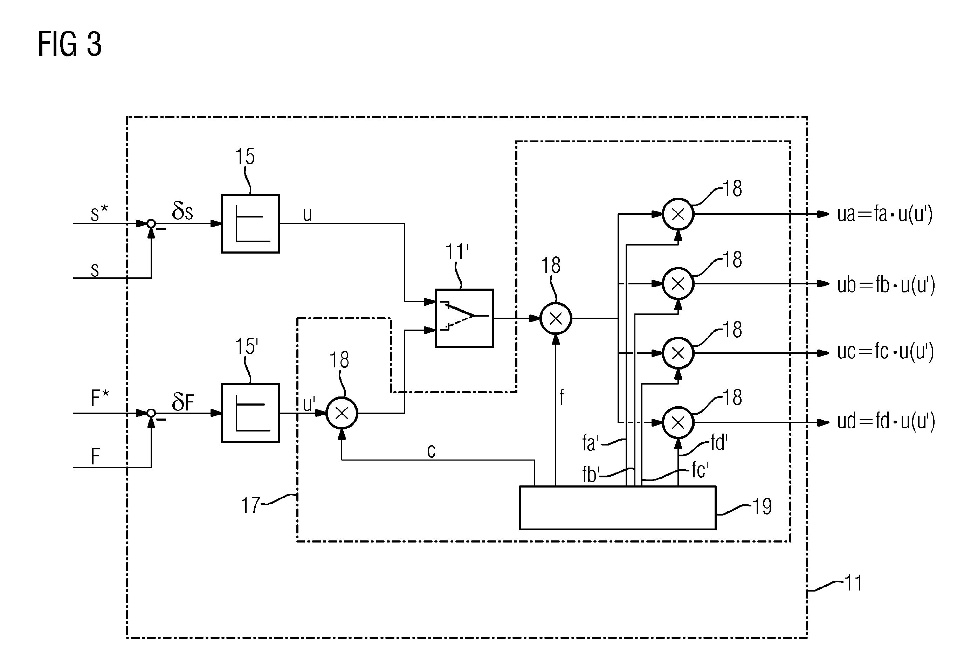

Der Regeleinrichtung 11 werden gemäß FIG 1 zunächst eine Sollgröße s*, F* und eine Istgröße s, F zugeführt. Es ist möglich, dass es sich bei den zugeführten Größen s*, F*, s, F um eine vom Kolben 3 anzunehmende Sollstellung s* und die vom Kolben 3 angenommene Iststellung s handelt. Alternativ ist es möglich, dass es sich bei den zugeführten Größen s*, F*, s, F um eine vom Kolben 3 auszuübende Sollkraft F* und eine vom Kolben 3 ausgeübte Istkraft F handelt. Gemäß FIG 3 ist es alternativ weiterhin möglich, dass der Regeleinrichtung 11 beide Wertepaare s*, s, F*, F zugeführt werden und dass mittels einer Umschalteinrichtung 11' festgelegt wird, ob ein Positionsregler 15 oder ein Kraftregler 15' der Regeleinrichtung 11 aktiv ist. Die Regler 15, 15' können prinzipiell beliebige Regler sein. Eine Ausgestaltung der Regler 15, 15' als P-Regler ist jedoch in der Regel ausreichend und auch bevorzugt.

Unabhängig davon, ob die Regeleinrichtung 11 als Positionsregler 15 oder als Kraftregler 15' oder als zwischen Positions- und Kraftregelung umschaltbarer Regler ausgebildet ist, ermittelt die Regeleinrichtung 11 mittels des entsprechenden Reglers 15, 15' anhand der Differenz $\delta s$, $\delta F$ von Sollgröße s*, F* und Istgröße s, F eine vorläufige Stellgröße u, u' für die Ventilsteuereinrichtung 7 und gibt die Stellgröße u, u' aus. Die Regeleinrichtung 11 führt dadurch die entsprechende Regelung der Hydraulikzylindereinheit 1 (genauer: des Kolbens 3) durch.

Den Reglern 15, 15' ist gemäß FIG 3 eine Linearisierungseinheit 17 nachgeordnet. Die Linearisierungseinheit 17 weist Multiplizierer 18 und eine Ermittlungseinrichtung 19 auf. Die Ermittlungseinrichtung 19 bestimmt in noch zu erläuternder Weise Linearisierungsfaktoren fa bis fd und gibt die Linearisierungsfaktoren fa bis fd an die Multiplizierer 18 aus. Die Multiplizierer 18 nehmen weiterhin vom Regler 15 die vorläufige Stellgröße u, u' entgegen und multiplizieren die vorläufige Stellgröße u, u' mit den ihnen zugeführten Linearisierungsfaktoren fa bis fd. Die Linearisierungseinheit 17 ermittelt auf diese Weise die endgültigen Stellgrößen ua bis ud, welche an die Ventilsteuereinheiten 7a bis 7d ausgegeben werden.

Die Ventilsteuereinheiten 7a bis 7d stellen sich entsprechend den an sie übermittelten Stellgrößen ua bis ud ein. Dadurch wird bewirkt, dass der Kolben 3 mit einer Verstellgeschwindigkeit v verschoben bzw. verstellt wird.

Die Ermittlungseinrichtung 19 der Linearisierungseinheit 17 bestimmt die Linearisierungsfaktoren fa bis fd dynamisch als Funktion zumindest der Iststellung s des Kolbens 3, der beidseitig des Kolbens 3 herrschenden Arbeitsdrücke pA, pB sowie der pumpen- und tankseitig der Ventilsteuereinheiten 7a bis 7d herrschenden Arbeitsdrücke pP, pT. Die Ermittlungseinrichtung 19 bestimmt die Linearisierungsfaktoren fa bis fd derart, dass ein Verhältnis der Verstellgeschwindigkeit v bei Positionsregelung zur Differenz δs von Sollstellung s* und Iststellung s und bei Kraftregelung zur Differenz δF von Sollkraft F* und Istkraft F unabhängig von der Iststellung s und den Arbeitsdrücken pA, pB, pP, pT ist.

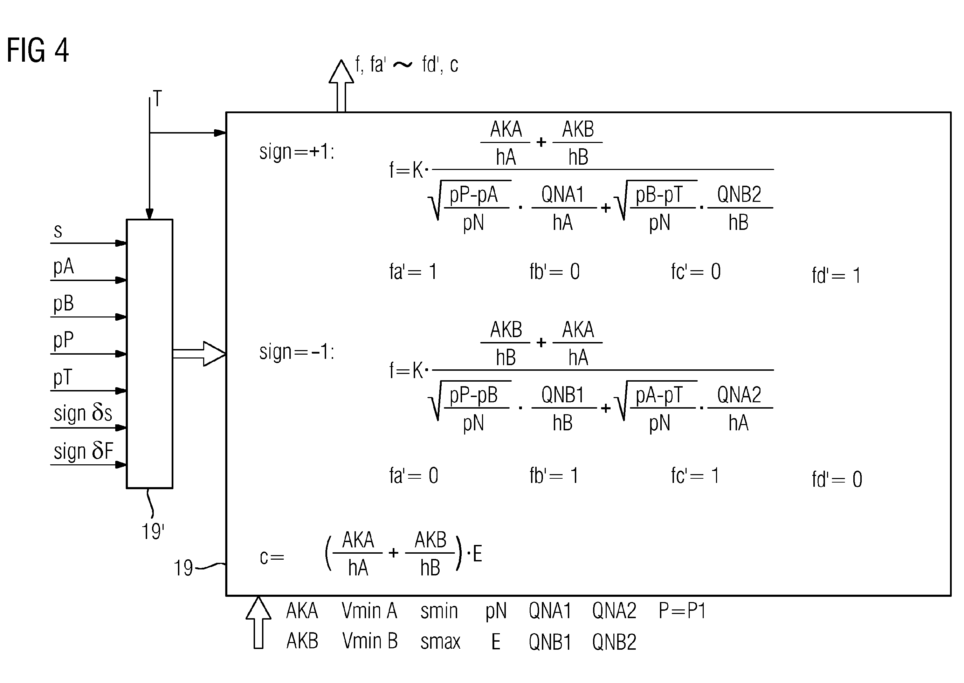

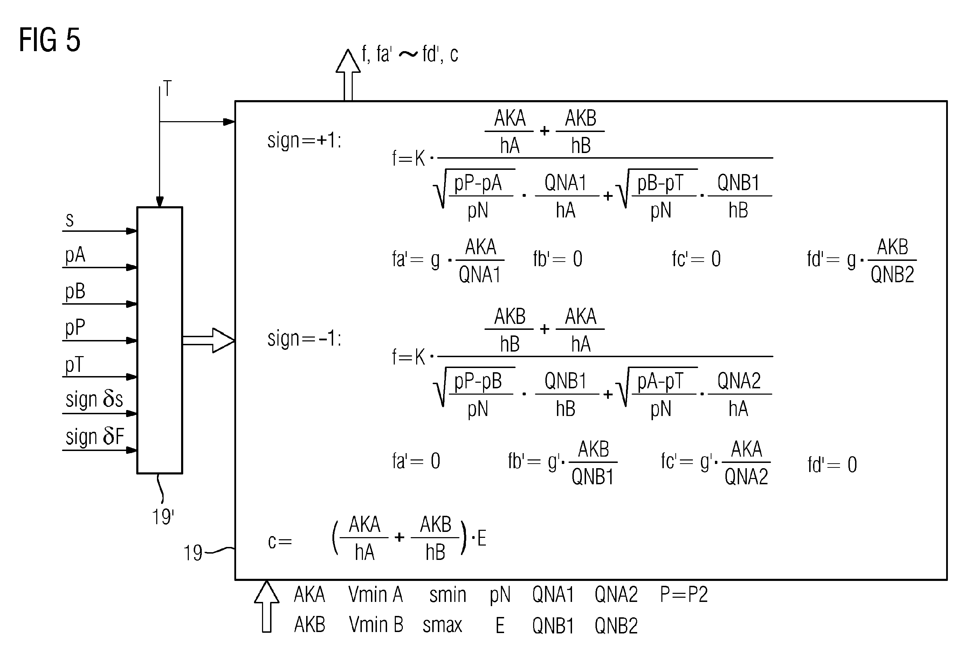

Die Wirkungsweise der Ermittlungseinrichtung 19 wird nachfolgend in Verbindung mit den FIG 4 und 5 detaillierter erläutert.

Die Regeleinrichtung 11 ist üblicherweise mit einem Arbeitstakt T getaktet. Mit der Frequenz des Arbeitstaktes T nimmt die Regeleinrichtung 11 jeweils eine neue Sollgröße s*, F* und eine neue Istgröße s, F entgegen, ermittelt die Stellgrößen ua bis ud und gibt die Stellgrößen ua bis ud an die Ventilsteuereinheiten 7a bis 7d aus.

Ebenfalls mit dem Arbeitstakt T wird der Ermittlungseinrichtung 19 jeweils ein neuer Wert für die Iststellung s und die beidseitig des Kolbens 3 herrschenden Arbeitsdrücke pA, pB zugeführt. Weiterhin wird der Ermittlungseinrichtung 19 das Vorzeichen der Regeldifferenz δs, δF zugeführt. Das taktweise Zuführen dieser Größen s, pA, pB, δs, δF ist in den FIG 4 und 5 dadurch angedeutet, dass der Ermittlungseinrichtung 19 ein Latch 19' vorgeordnet ist, das mit dem Arbeitstakt T getaktet ist.

Der Pumpendruck pP und der Tankdruck pT sind in der Regel konstant. Es ist daher möglich, diese beiden Drücke pP, pT der Ermittlungseinrichtung 19 einmalig (d. h. vorab und damit als Parameter) zuzuführen. Alternativ ist jedoch ebenfalls möglich, den pumpenseitigen Arbeitsdruck pP und den tankseitigen Arbeitsdruck pT der Ermittlungseinrichtung 19 getaktet und damit als Variable zuzuführen.

In der Regel benötigt die Ermittlungseinrichtung 19 zur exakten Berechnung der Linearisierungsfaktoren fa bis fd weitere Daten. Die weiteren Daten umfassen in der Regel Leistungsdaten pN, QNA, QNB der Ventilsteuereinheit 7, die beidseitig des Kolbens 3 wirksamen Arbeitsflächen AKA, AKB sowie die beidseits des Kolbens 3 minimal möglichen wirksamen Volumina VminA, VminB. Diese Werte können der Ermittlungseinrichtung 19 fest vorgegeben sein, beispielsweise durch das Softwaremodul 12. Alternativ können die weiteren Daten - zumindest teilweise - der Ermittlungseinrichtung 19 nach der Programmierung der Regeleinrichtung 11 als Parameter (d. h. im Rahmen der Inbetriebsetzung der Regeleinrichtung 11) vorgegeben werden, die während des Betriebs der Regeleinrichtung 11 unverändert beibehalten werden.

Die Linearisierungsfaktoren fa bis fd lassen sich gemäß FIG 3 als Produkt eines Basislinearisierungsfaktors f und eines jeweiligen Zusatzlinearisierungsfaktors fa' bis fd' schreiben. Der Basislinearisierungsfaktor f ist für alle Linearisierungsfaktoren fa bis fd einheitlich. Die Zusatzlinearisierungsfaktoren fa' bis fd' sind individuell für den jeweiligen Linearisierungsfaktor fa bis fd.

Der Basislinearisierungsfaktor f ist abhängig vom Vorzeichen der Regeldifferenz δs, δF. Im Falle einer Positionsregelung ist der Basislinearisierungsfaktor f damit abhängig von der Bewegungsrichtung des Kolbens 3, das heißt von der Richtung, in die der Kolben 3 verschoben werden soll. Nachfolgend wird angenommen, dass die Regeldifferenz δs, δF größer als Null ist. In diesem Fall bestimmt die Ermittlungseinrichtung 19 den Basislinearisierungsfaktor f vorzugsweise zu

$$f = K \cdot \frac{\dfrac{AKA}{hA} + \dfrac{AKB}{hB}}{\sqrt{\dfrac{pP - pA}{pN}} \cdot \dfrac{QNA1}{hA} + \sqrt{\dfrac{pB - pT}{pN}} \cdot \dfrac{QNB2}{hB}}$$

Die in obiger Formel verwendeten Größen sind - mit Ausnahme der Leistungsdaten pN, QNA, QNB der Ventilsteuereinheit 7 bereits definiert. Die Leistungsdaten pN, QNA und QNB der Ventilsteuereinheit 7 haben folgende Bedeutung:

- pN ist ein (prinzipiell beliebiger) Nominaldruck. Er entspricht einem Referenzdruck, auf den die Größen QNA1, QNA2, QNB1 und QNB2 normiert sind.
- QNA1 ist ein Nennvolumenstrom, der in das Arbeitsvolumen 5A strömt, wenn eine Differenz zwischen dem Pumpendruck pP und dem im Arbeitsvolumen 5A herrschenden Arbeitsdruck pA gleich dem Nominaldruck pN ist.
- QNA2 ist ein Nennvolumenstrom, der aus dem Arbeitsvolumen 5A strömt, wenn eine Differenz zwischen dem Arbeitsdruck pA und dem Tankdruck pT gleich dem Nominaldruck pN ist.
- QNB1 und QNB2 sind - bezogen auf das Arbeitsvolumen 5B - in analoger Weise definiert.
- K ist ein frei wählbarer Skalierungsfaktor.

Wie bereits erwähnt, ist der Basislinearisierungsfaktor f vom Vorzeichen der Regeldifferenz $\delta s$, $\delta F$ abhängig. In dem Fall, dass die Regeldifferenz $\delta s$, $\delta F$ negativ ist, ergibt sich der Basislinearisierungsfaktor f vorzugsweise zu

$$f = K \cdot \frac{\dfrac{AKB}{hB} + \dfrac{AKA}{hA}}{\sqrt{\dfrac{pP - pB}{pN}} \cdot \dfrac{QNB1}{hB} + \sqrt{\dfrac{pA - pT}{pN}} \cdot \dfrac{QNA2}{hA}}$$

Der Basislinearisierungsfaktor f entspricht somit dem (einzigen) Linearisierungsfaktor, der in der DE 10 2007 051 857 B3 und der korrespondierenden US-Schrift ermittelt wird.

Bei der Bestimmung der Zusatzlinearisierungsfaktoren fa' bis fd' berücksichtigt die Ermittlungseinrichtung 19 gemäß den FIG 4 und 5 vorzugsweise zusätzlich einen Parameter P, welcher der Ermittlungseinrichtung 19 von außen zugeführt wird, beispielsweise von einer Bedienperson. Der Parameter P kann - je nach Ausgestaltung - ein binärer Wert sein, eine analoge Größe sein, eine Mehrzahl von binären Werten sein und unter Umständen sogar eine Mehrzahl von analogen Größen sein.

Wenn die Regeldifferenz $\delta s$, $\delta F$ positiv ist und der Parameter P einen ersten Wert P1 aufweist, setzt die Ermittlungseinrichtung 19 gemäß FIG 4 die Zusatzlinearisierungsfaktoren fa' und fd' auf von Null verschiedene Werte, die Zusatzlinearisierungsfaktoren fb' und fc' auf den Wert Null. Die Zusatzlinearisierungsfaktoren fa' und fd' können insbesondere den gleichen Wert aufweisen, beispielsweise den Wert 1.

Wenn die Regeldifferenz $\delta s$, $\delta F$ negativ ist und der Parameter P einen ersten Wert P1 aufweist, setzt die Ermittlungseinrichtung 19 gemäß FIG 4 die Zusatzlinearisierungsfaktoren fb' und fc' auf von Null verschiedene Werte, die Zusatzlinearisierungsfaktoren fa' und fd' auf den Wert Null. Die Zusatzlinearisierungsfaktoren fb' und fc' können insbesondere den gleichen Wert aufweisen, beispielsweise den Wert 1.

Wenn der Parameter P einen zweiten Wert P2 aufweist, bestimmt die Ermittlungseinrichtung 19 die Zusatzlinearisierungsfaktoren fa' bis fd' gemäß FIG 5 derart, dass die Arbeitsdrücke pA, pB, pP, pT sich der Beziehung

$$pP + pT = pA + pB$$

annähern. Wenn die Regeldifferenz $\delta s$, $\delta F$ positiv ist, bestimmt die Ermittlungseinrichtung 19 in diesem Fall die Zusatzlinearisierungsfaktoren fa' und fd' zu

$$fa' = g \cdot \frac{AKA}{QNA1} \qquad \text{und} \qquad fd' = g \cdot \frac{AKB}{QNB2}$$

$$\text{mit} \quad g = \frac{\sqrt{\dfrac{pP - pA}{pN}} \cdot \dfrac{QNA1}{hA} + \sqrt{\dfrac{pB - pT}{pN}} \cdot \dfrac{QNB2}{hB}}{\sqrt{\dfrac{pP - pA}{pN}} \cdot \dfrac{AKA}{hA} + \sqrt{\dfrac{pB - pT}{pN}} \cdot \dfrac{AKB}{hB}}$$

Die Zusatzlinearisierungsfaktoren fb' und fc' weisen in diesem Fall den Wert Null auf.

Wenn die Regeldifferenz δs, δF hingegen negativ ist, bestimmt die Ermittlungseinrichtung 19 in diesem Fall die Zusatzlinearisierungsfaktoren fb' und fc' zu

$$fb' = g' \cdot \frac{AKB}{QNB1} \qquad \text{und} \qquad fc' = g' \cdot \frac{AKA}{QNA2}$$

$$\text{mit} \quad g' = \frac{\sqrt{\dfrac{pA - pT}{pN}} \cdot \dfrac{QNA2}{hA} + \sqrt{\dfrac{pP - pB}{pN}} \cdot \dfrac{QNB1}{hB}}{\sqrt{\dfrac{pA - pT}{pN}} \cdot \dfrac{AKA}{hA} + \sqrt{\dfrac{pP - pB}{pN}} \cdot \dfrac{AKB}{hB}}$$

Die Zusatzlinearisierungsfaktoren fa' und fd' weisen in diesem Fall den Wert Null auf.

Obenstehend wurde eine Vorgehensweise erläutert, bei welcher die Linearisierungsfaktoren fa bis fd als Produkt des Basislinearisierungsfaktors f und eines jeweiligen Zusatzlinearisierungsfaktors fa' bis fd' ermittelt werden. Es ist selbstverständlich auch eine direkte Ermittlung der Linearisierungsfaktoren fa bis fd - also ohne Umweg über die Produktbildung - möglich.

Obenstehend wurden weiterhin die Linearisierungsfaktoren fa bis fd ermittelt, welche erforderlich sind, um eine Linearisierung im positionsgeregelten Betrieb der Hydraulikzylindereinheit 1 zu bewirken. Falls eine Kraftregelung erfolgt, ist gemäß der Darstellung in FIG 3 lediglich noch eine Skalierung mit einer Federkonstante c der Hydraulikflüssigkeit 10 erforderlich. Die Federkonstante c ergibt sich zu

$$c = \left( \frac{AKA}{hA} + \frac{AKB}{hB} \right) \cdot E$$

E bedeutet hierbei die Elastizitätskonstante der Hydraulikflüssigkeit 10.

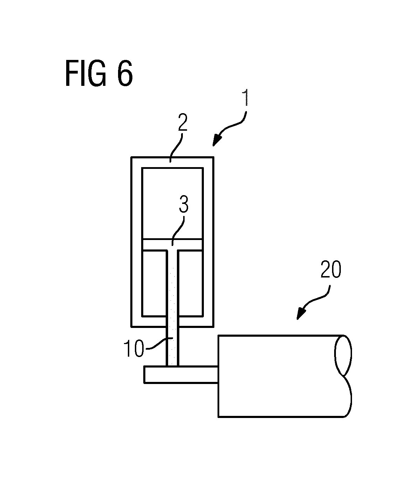

Die erfindungsgemäße Anordnung aus Hydraulikzylindereinheit 1 und Regeleinrichtung 11 ist prinzipiell beliebig einsetzbar. Vorzugsweise wird sie jedoch gemäß FIG 6 zur Anstellungsregelung eines in FIG 6 schematisch angedeuteten Walzgerüsts 20 verwendet.

Die vorliegende Erfindung weist viele Vorteile auf. Insbesondere erfolgt in jedem Betriebspunkt der Hydraulikzylindereinheit 1 ein optimaler Betrieb der Regeleinrichtung 11. Die Regelung ist vollständig linearisiert. Transformationen (vergleiche nicht lineares HGC) sind nicht erforderlich. Weiterhin ist - ebenfalls im Gegensatz zum nicht linearen HGC - auf einfache Weise eine Einbindung der vorliegenden Erfindung in bereits vorhandene Regelsysteme möglich, da bereits vorhandene überlagerte Regelstrukturen (vermaschte Regelungen und dergleichen) nicht verändert werden müssen. Es ergibt sich damit eine vereinfachte Inbetriebsetzung und Wartbarkeit der Regeleinrichtung 11 gemäß der vorliegenden Erfindung.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Regeleinrichtung zum Regeln einer Hydraulikzylindereinheit (1),

   - wobei die Regeleinrichtung einen Regler (15, 15') aufweist, der eingangsseitig eine Sollgröße (s*, F*) und eine Istgröße (s, F) entgegen nimmt und anhand der Differenz ($\delta$s, $\delta$F) von Sollgröße (s*, F*) und Istgröße (s, F) eine vorläufige Stellgröße (u, u') für Ventilsteuereinheiten (7) der Hydraulikzylindereinheit (1) ermittelt,
   - wobei die Sollgröße (s*, F*) eine von einem Kolben (3) der Hydraulikzylindereinheit (1) anzunehmende Sollstellung (s*) und die Istgröße (s, F) eine vom Kolben (3) angenommene Iststellung (s) sind oder die Sollgröße (s*, F*) eine vom Kolben (3) auszuübende Sollkraft (F*) und die Istgröße (s, F) eine vom Kolben (3) ausgeübte Istkraft (F) sind,
   - wobei dem Regler (15, 15') eine Linearisierungseinheit (17) nachgeordnet ist, welche anhand der vorläufigen Stellgröße (u, u') und Linearisierungsfaktoren (fa bis fd) endgültige Stellgrößen (ua bis ud) ermittelt, die sie an Ventilsteuereinheiten (7a bis 7d) ausgibt, so dass der Kolben (3) mit einer Verstellgeschwindigkeit (v) verstellt wird,
   - wobei die Linearisierungseinheit (17) die Linearisierungsfaktoren (fa bis fd) dynamisch als Funktion zumindest der Iststellung (s) des Kolbens (3) und beidseitig des Kolbens (3) sowie pumpen- und tankseitig der Ventilsteuereinheiten (7a bis 7d) herrschender Arbeitsdrücke (pA, pB, pP, pT) bestimmt,
   - wobei die Linearisierungseinheit (17) die Linearisierungsfaktoren (fa bis fd) derart bestimmt, dass ein Verhältnis der Verstellgeschwindigkeit (v) zur Differenz ($\delta$s, $\delta$F) von Sollgröße (s*, F*) und Istgröße (s, F) unabhängig von der Iststellung (s) des Kolbens (3) und den Arbeitsdrücken (pA, pB, pP, pT) ist.

2. Regeleinrichtung nach Anspruch 1,
   **dadurch gekennzeichnet, dass** der Linearisierungseinheit (17) zusätzlich ein Parameter (P) zugeführt wird und die Linearisierungseinheit (17) den Parameter (P) bei der Bestimmung der Linearisierungsfaktoren (fa bis fd) berücksichtigt.

3. Regeleinrichtung nach Anspruch 2,
   **dadurch gekennzeichnet, dass** die Linearisierungseinheit (17) in dem Fall, dass der Parameter (P) einen ersten Wert (P1) aufweist, die Linearisierungsfaktoren (fa bis fd) derart bestimmt, dass zwei der Linearisierungsfaktoren (fa bis fd) den Wert Null aufweisen und zwei andere der Linearisierungsfaktoren (f) von Null verschiedene Werte aufweisen.

4. Regeleinrichtung nach Anspruch 2 oder 3,
   **dadurch gekennzeichnet, dass** die Linearisierungseinheit (17) in dem Fall, dass der Parameter (P) einen zweiten Wert (P2) aufweist, die Linearisierungsfaktoren (fa bis fd) derart bestimmt, dass die Summe der beidseitig des Kolbens (3) herrschenden Arbeitsdrücke (pA, pB) sich der Summe der pumpen- und tankseitig der Ventilsteuereinheiten (7a bis 7d) herrschenden Arbeitsdrücke (pP, pT) annähert.

5. Regeleinrichtung nach einem der obigen Ansprüche,
   **dadurch gekennzeichnet, dass** die Ventilsteuereinheiten (7a bis 7d) als binär geschaltete Schaltventile ausgebildet sind.

6. Regeleinrichtung nach einem der obigen Ansprüche,
   **dadurch gekennzeichnet, dass** sie als softwareprogrammierbare Regeleinrichtung ausgebildet ist und mit einem Softwaremodul (12) programmiert ist, so dass sie aufgrund der Programmierung mit dem Softwaremodul (12) nach einem der obigen Ansprüche ausgebildet ist.

7. Softwaremodul, das Maschinencode (14) umfasst, dessen Abarbeitung durch eine an eine Hydraulikzylindereinheit (1) angebundene softwareprogrammierbare Regeleinrichtung (11) bewirkt, dass die Regeleinrichtung (11) gemäß Anspruch 6 ausgebildet wird.

8. Datenträger, auf dem in maschinenlesbarer Form ein Softwaremodul (12) nach Anspruch 7 gespeichert ist.

9. Verwendung einer mittels einer Regeleinrichtung (11) nach einem der Ansprüche 1 bis 6 geregelten Hydraulikzylindereinheit (1) zur Anstellungsregelung eines Walzgerüsts (20).

## FIG 1

## FIG 2

EP 2 664 968 A1

FIG 3

# FIG 4

Inputs: T

Inputs: s, pA, pB, pP, pT, sign δs, sign δF → 19'

sign = +1:

$$f = K \cdot \frac{\dfrac{AKA}{hA} + \dfrac{AKB}{hB}}{\sqrt{\dfrac{pP-pA}{pN}} \cdot \dfrac{QNA1}{hA} + \sqrt{\dfrac{pB-pT}{pN}} \cdot \dfrac{QNB2}{hB}}$$

fa' = 1      fb' = 0      fc' = 0      fd' = 1

sign = −1:

$$f = K \cdot \frac{\dfrac{AKB}{hB} + \dfrac{AKA}{hA}}{\sqrt{\dfrac{pP-pB}{pN}} \cdot \dfrac{QNB1}{hB} + \sqrt{\dfrac{pA-pT}{pN}} \cdot \dfrac{QNA2}{hA}}$$

fa' = 0      fb' = 1      fc' = 1      fd' = 0

$$c = \left( \frac{AKA}{hA} + \frac{AKB}{hB} \right) \cdot E$$

Output: f, fa' ~ fd', c

19

| AKA | Vmin A | smin | pN | QNA1 | QNA2 | P = P1 |
| AKB | Vmin B | smax | E | QNB1 | QNB2 | |

EP 2 664 968 A1

# FIG 5

Inputs: $s$, $pA$, $pB$, $pP$, $pT$, sign $\delta s$, sign $\delta F$ — into block $19'$.

Input $T$ and output $f, fa' \sim fd', c$ into block $19$.

sign $= +1$:

$$f = K \cdot \frac{\dfrac{AKA}{hA} + \dfrac{AKB}{hB}}{\sqrt{\dfrac{pP-pA}{pN}} \cdot \dfrac{QNA1}{hA} + \sqrt{\dfrac{pB-pT}{pN}} \cdot \dfrac{QNB1}{hB}}$$

$$fa' = g \cdot \frac{AKA}{QNA1} \qquad fb' = 0 \qquad fc' = 0 \qquad fd' = g \cdot \frac{AKB}{QNB2}$$

sign $= -1$:

$$f = K \cdot \frac{\dfrac{AKB}{hB} + \dfrac{AKA}{hA}}{\sqrt{\dfrac{pP-pB}{pN}} \cdot \dfrac{QNB1}{hB} + \sqrt{\dfrac{pA-pT}{pN}} \cdot \dfrac{QNA2}{hA}}$$

$$fa' = 0 \qquad fb' = g' \cdot \frac{AKB}{QNB1} \qquad fc' = g' \cdot \frac{AKA}{QNA2} \qquad fd' = 0$$

$$c = \left( \frac{AKA}{hA} + \frac{AKB}{hB} \right) \cdot E$$

| AKA | Vmin A | smin | pN | QNA1 | QNA2 | P=P2 |
|-----|--------|------|----|------|------|------|
| AKB | Vmin B | smax | E  | QNB1 | QNB2 |      |

EP 2 664 968 A1

FIG 6

Europäisches
Patentamt

European
Patent Office

Office européen
des brevets

## EUROPÄISCHER RECHERCHENBERICHT

Nummer der Anmeldung

EP 12 16 8164

| | EINSCHLÄGIGE DOKUMENTE | | | |
|---|---|---|---|---|
| Kategorie | Kennzeichnung des Dokuments mit Angabe, soweit erforderlich, der maßgeblichen Teile | | Betrifft Anspruch | KLASSIFIKATION DER ANMELDUNG (IPC) |
| A,D | DE 10 2007 051857 B3 (SIEMENS AG [DE]) 23. April 2009 (2009-04-23) * Zusammenfassung * * Absätze [0001], [0007], [0008] * * Absätze [0022] - [0043] * * Seiten 1-9 * * Abbildungen 1,2,4 * ----- | | 1-9 | INV. G05B11/38 G05D3/20 F15B15/00 |
| A | DE 10 2007 003243 A1 (SIEMENS AG [DE]) 31. Juli 2008 (2008-07-31) * Zusammenfassung * * Absätze [0001], [0013] * * Abbildungen 1,2 * ----- | | 1-9 | |
| A | EP 1 965 083 A1 (DAIKIN IND LTD [JP]) 3. September 2008 (2008-09-03) * Anspruch 1 * * Abbildung 1 * ----- | | 1-9 | |
| | | | | RECHERCHIERTE SACHGEBIETE (IPC) |
| | | | | G05B G05D F15B |

Der vorliegende Recherchenbericht wurde für alle Patentansprüche erstellt

| Recherchenort | Abschlußdatum der Recherche | Prüfer |
|---|---|---|
| Den Haag | 11. Oktober 2012 | Dörre, Thorsten |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                EP 12 16 8164

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-10-2012

| Im Recherchenbericht angeführtes Patentdokument | Datum der Veröffentlichung | Mitglied(er) der Patentfamilie | | Datum der Veröffentlichung |
|---|---|---|---|---|
| DE 102007051857 B3 | 23-04-2009 | AT | 504873 T | 15-04-2011 |
| | | CN | 101842760 A | 22-09-2010 |
| | | DE | 102007051857 B3 | 23-04-2009 |
| | | EP | 2206031 A2 | 14-07-2010 |
| | | PT | 2206031 E | 31-05-2011 |
| | | RU | 2010121777 A | 10-12-2011 |
| | | US | 2010294125 A1 | 25-11-2010 |
| | | WO | 2009056378 A2 | 07-05-2009 |
| DE 102007003243 A1 | 31-07-2008 | AT | 528080 T | 15-10-2011 |
| | | BR | PI0806818 A2 | 13-09-2011 |
| | | CN | 101588876 A | 25-11-2009 |
| | | DE | 102007003243 A1 | 31-07-2008 |
| | | EP | 2125258 A1 | 02-12-2009 |
| | | RU | 2009131689 A | 27-02-2011 |
| | | US | 2010005844 A1 | 14-01-2010 |
| | | WO | 2008090112 A1 | 31-07-2008 |
| EP 1965083 A1 | 03-09-2008 | AT | 528512 T | 15-10-2011 |
| | | CN | 101360917 A | 04-02-2009 |
| | | EP | 1965083 A1 | 03-09-2008 |
| | | JP | 4425253 B2 | 03-03-2010 |
| | | JP | 2008057611 A | 13-03-2008 |
| | | KR | 20080087084 A | 30-09-2008 |
| | | US | 2009097986 A1 | 16-04-2009 |
| | | WO | 2008026544 A1 | 06-03-2008 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007051857 B3
- US 2010294125 A1